# EUROPEAN PATENT APPLICATION

(11) **EP 2 618 067 A2**
(43) Date of publication of application: **24.07.2013**
(21) Application number: 13000231.4
(22) Date of filing: 17.01.2013
(51) Int. Cl.: F24F 6/02, F24F 12/00, F24F 13/22, F24F 5/00

(54) **Ventilation system**

(30) Priority: 19.01.2012 NL 1039307
(71) Applicant: Brink Climate Systems B.V., 7951 DA Staphorst (NL)
(72) Inventor: Boogaard, Maurits Alexander, 7951 DA Staphorst (NL)
(74) Representative: Ferguson, Alexander

(57) **Abstract**

Ventilation system for a residential space, comprising
- a first duct system for discharging inside air from the residential space and delivering it to the outside environment, and a second duct system for taking in outside air and delivering it to the residential space,
- a heat exchanger incorporated in both duct systems for bringing the inside air and the outside air into heat exchanging contact with each other,
- wherein the heat exchanger comprises at least two partial heat exchangers that as first and second partial heat exchangers are placed in series with each other at least as regards the introduced outside air, wherein the first partial heat exchanger is placed upstream from the second partial heat exchanger as regards the introduced outside air,
- wherein the ventilation system further comprises an air humidifier for the outside air, which is positioned in the first duct system in between both partial heat exchangers.
- wherein the first heat exchanger is provided with a condensate collector for moisture present in the inside air flowing through it and
- wherein the condensate collector is connected to the air humidifier for delivery of the collected condensate thereto.

## Description

### BACKGROUND OF THE INVENTION

The invention relates to a ventilation system in which a heat exchanger, such as a heat recovery exchanger is incorporated. The invention further relates to a method for ventilating a residential space.

Such ventilation systems are particularly used in houses in which the residential space that may or may not be divided, is in airflow contact with the outside air by means of a multiple duct system. A heat exchanger, particularly a counter-flow or cross-flow heat exchanger, usually is positioned in a space adjacent to the roof. In there the outside air drawn in by a ventilator is brought into thermal exchange with the inside air drawn from the residential space by a ventilator.

The heat exchanger usually incorporates a package of plates, in between which in an alternating manner, first and second passages have been formed, intended for inside air-outside air-inside air, etc. Partitioning plates between the first and second passages are thermally permeable, so that heat in the inside air to be discharged is transferred to the inbound relatively cold outside air, which as it were is preheated prior to ending up in the residential space.

The cold outside air entering the heat exchanger contains little moisture, particularly in case of frosty weather. After heating the relative humidity is low, considerably lower than in the residential space. The air in the residential space will as a result become dryer and dryer, which may be experienced as particularly unpleasant by the persons residing in there.

In order to improve this situation use is made of so-called enthalpy heat exchangers, in which the moisture transfer from the inside air to be discharged to the inbound outside air takes place by permeable partitions between the permanent inside air passages and the permanent outside air passages in the heat exchanger. A limitation therein is that the temperature of the inbound outside air can still be too low for absorbing a sufficient amount of moisture for that purpose.

### SUMMARY OF THE INVENTION

It is an object of the invention to provide a ventilation method and a ventilation system including heat recovery, whereby cold times an indoor climate can be realised that feels less dry.

It is an object of the invention to provide a ventilation method and a ventilation system including heat recovery, whereby in an efficient manner outside air can be provided with an increased moisture content.

In view of achieving at least one of these objects the invention according to one aspect, provides a ventilation system for a residential space, comprising
- a first duct system for taking in outside air and delivering it to the residential space and a second duct system for discharging inside air from the residential space and delivering it to the outside environment,
- a heat exchanger incorporated in both duct systems for bringing the inside air and the outside air into heat exchanging contact with each other,
- wherein the heat exchanger comprises at least two partial heat exchangers that as first and second partial heat exchangers are placed in series with each other at least as regards the introduced outside air, wherein the first partial heat exchanger is placed upstream from the second partial heat exchanger as regards the introduced outside air,
- wherein the ventilation system further comprises an air humidifier for the outside air, which is positioned in the first duct system in between both partial heat exchangers.

In this stepped arrangement the outside air in the first partial heat exchanger is at it were preheated before it contacts the air humidifier, so that the outside air is able to absorb more moisture from it. In a second partial heat exchanger the outside air is additionally heated or post-heated, wherein the drop in temperature of the outside air as a result of the evaporation of moisture can be compensated. The outside air can be further heated up to -preferably- nearly room temperature.

It is noted that from US 2002/164944 a ventilation system is known with two heat exchangers that are in series for the outside air and parallel for the inside air to be discharged. The arrangement is adapted for dehumidifying the outside air and for humidifying the inside air to be discharged. For that purpose the humidifiers for the inside air to be discharged have been arranged on each heat exchanger itself.

In an efficient embodiment the first partial heat exchanger is provided with a condensate collector for moisture condensed from the inside air flowing through it and the condensate collector is connected to the air humidifier for delivering the collected condensate thereto. In that way irreversible discharge of moisture from the residential space is counteracted, whereas said moisture, present in the inside air to be discharged, is used for the outside air taken in at a location wherein it can indeed amply absorb moisture.

In an elaboration thereof the first partial heat exchanger is placed at a higher level than the second partial heat exchanger so that use can be made of gravity in transporting condensate. In a compact embodiment the first partial heat exchanger is placed at least substantially straight above the second partial heat exchanger.

In an even more compact embodiment, wherein the partial heat exchangers each have an inside air inlet, an inside air outlet, an outside air inlet and an outside air outlet, the outside air outlet of the first partial heat exchanger is situated below the inside air inlet thereof and the outside air inlet of the second partial heat exchanger is situated above the inside air outlet thereof, and the outside air outlet of the first partial heat exchanger is situated at least substantially straight above the outside air inlet of the second heat exchanger.

In one embodiment the inside air to be discharged is passed on parallel through both partial heat exchangers. In an alternative compact embodiment the first and second partial heat exchangers are also placed in series with each other for the inside air to be discharged, wherein in an even more compact embodiment the first partial heat exchanger is placed downstream from the second partial heat exchanger as regards the inside air to be discharged.

Alternatively or additionally to the embodiment with condensate collector, the air humidifier can be fed by suitable means with moisture from a source, such as a tank containing demineralised water.

According to a further aspect the invention provides a method for ventilating a residential space, wherein the outside air is taken in and via a first duct system is supplied and delivered to the residential space and inside air via a second duct system is discharged from the residential space and delivered to the outside environment, wherein the inside air and the outside air are brought into heat exchanging contact with each other in a heat exchanger,
- wherein use is made of a ventilation system including a heat exchanger comprising at least two partial heat exchangers that as first and second partial heat exchangers are placed in series with each other at least as regards the introduced outside air, wherein the outside air taken in first flows through the first partial heat exchanger and then through the second partial heat exchanger,
- wherein the outside air taken in is brought into moisture absorbing contact with an air humidifier at a location in between both partial heat exchangers.

In an embodiment thereof moisture in the inside air to be discharged is allowed to condense in the first partial heat exchanger, wherein the collected condensate is passed to the air humidifier.

Preferably the inside air to be discharged is allowed to flow through both partial heat exchangers in series, wherein particularly the inside air to be discharged is first allowed to flow through the second partial heat exchanger and then through the first partial heat exchanger.

According to a further aspect the invention provides a method for ventilating a residential space, wherein the outside air is taken in and via a first duct system is supplied and delivered to the residential space and inside air via a second duct system is discharged from the residential space and delivered to the outside environment, wherein the inside air and the outside air are brought into heat exchanging contact with each other in a heat exchanger, wherein due to heat exchanging contact between the inside air to be discharged and the outside air taken in moisture in the inside air to be discharged is collected as condensate at a first location and is delivered to the outside air taken in at a second location in the first duct system situated downstream from the first location.

In an embodiment of this method, wherein use is made of a ventilation system including a heat exchanger comprising at least two partial heat exchangers, which are placed in series with each other as first and second partial heat exchangers, wherein the outside air taken in first flows through the first partial heat exchanger and then through the second partial heat exchanger, moisture in the inside air to be discharged is allowed to condense in the first partial heat exchanger and said condensate is passed on to an air humidifier for the outside air positioned in the first duct system in between both partial heat exchangers.

According to a further aspect the invention provides a heat exchanger suitable and intended for the ventilation system according to the invention.

The aspects and measures described in this description and the claims of the application and/or shown in the drawings of this application may where possible also be used individually. Said individual aspects may be the subject of divisional patent applications relating thereto. This particularly applies to the measures and aspects that are described per se in the sub claims.

### BRIEF DESCRIPTION OF THE DRAWINGS

The invention will be elucidated on the basis of an exemplary embodiment shown in the attached drawings, in which:
Figure 1 shows a schematic depiction of a building having a ventilation system according to the invention; and
Figure 2 shows a cut-away depiction of a heat exchanger in a ventilation system according to the invention.

### DETAILED DESCRIPTION OF THE DRAWINGS

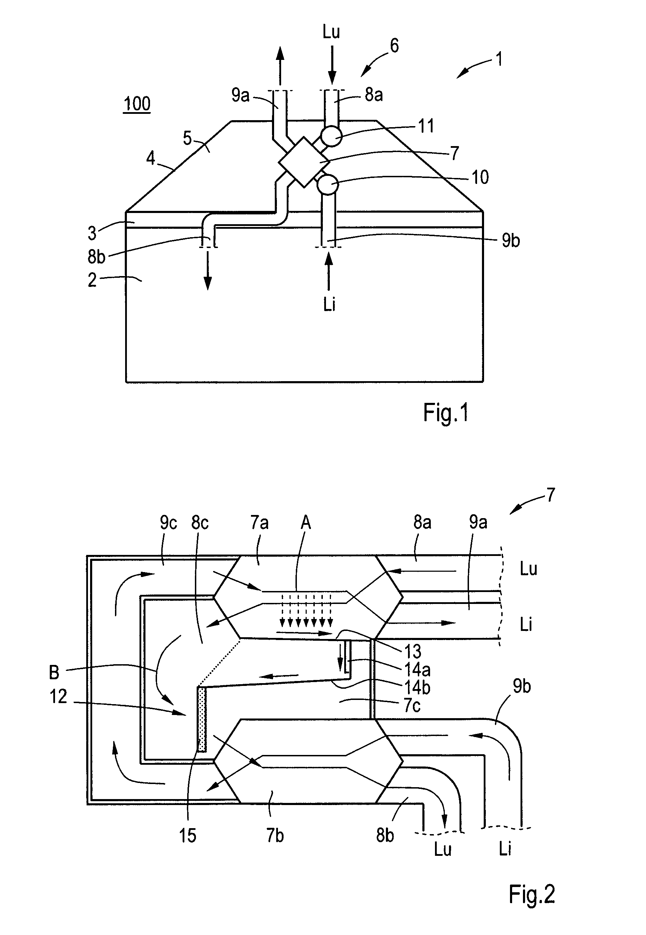

In the residence 1 of figure 1 is a residential space 2 that is separated by a ceiling 3 from an attic 5 that is covered by a roof 4. The largest part of a ventilation system 6 for the space 2 is positioned in the attic 5.

The ventilation system 6 comprises a (schematically shown) heat exchanger 7 for utilising heat in the inside air Li to be discharged from the space 2 for preheating the outside air Lu taken in from the surroundings 100. The ventilation system 6 further comprises a first duct system 8 with a duct 8a for supply of outside air Lu from the surroundings 100 to the exchanger 7 and a duct 8b for supply of outside air Lu from the exchanger 7 to the space 2. The ventilation system 6 furthermore comprises a second duct system 9 having a duct 9a for discharge of inside air Li from the exchanger 7 to the surroundings 100 and a duct 9b for discharge of inside air Li from the space 2 to the heat exchanger 7. For transporting the air ventilators 10 and 11 have been built in.

The heat exchanger 7 shown in figure 2 comprises two partial heat exchangers 7a (first) and 7b (second) that are connected to each other by intermediate duct 8c that is part of the first duct system 8 and an intermediate duct 9c that is part of the second duct system 9.

The partial heat exchangers 7a and 7b are situated straight above one another, with an intermediate space 7c in between them. In a manner known per se they are designed as counter-flow exchangers, with a package of heat-conducting plates situated horizontally next to each other and alternately separating a series of passages for outside air and a series of passages for inside air from each other. The bottom 13 of the first partial heat exchanger 7a descends to a discharge 14a situated in the intermediate space 7c, which discharge debouches in a descending gutter 14b that debouches in a gauze body 15 of an air humidifier 12. The gauze body 15 is permeable to air.

In operation, outside air Lu will via duct 8a end up in the partial heat exchanger 7a and inside air Li, arriving, direction A, in the partial heat exchanger 7a via duct 9b, partial heat exchanger 7b and intermediate duct 9c, is cooled due to the thermal transferring contact between both air flows via the partitioning plates -not shown-. The moisture in the inside air Li will in part condense. Said condensate will be collected on bottom 13 and via discharge 14a and gutter 14b be supplied to the air humidifier 12, particularly the gauze body 15.

In partial heat exchanger 7a, the outside air Lu will be heated by the inside air Li, and thus in preheated condition flow through intermediate duct 8c. The outside air Lu then flows through the gauze body 15, and absorbs the moisture present in there. As a result the temperature of the outside air becomes lower. This is compensated because the outside air Lu, with increased moisture content subsequently flows through the second partial heat exchanger 7b, where post-heating of the outside air Lu by the inside air Li takes place so that the outside air reaches a desired temperature.

The air humidifier 12 can optionally also be fed from a permanent source.

The above description is included to illustrate the operation of preferred embodiments of the invention and not to limit the scope of the invention. Starting from the above explanation many variations that fall within the spirit and scope of the present invention will be evident to an expert.

## Claims

1. Ventilation system for a residential space, comprising
- a first duct system for taking in outside air and delivering it to the residential space and a second duct system for discharging inside air from the residential space and delivering it to the outside environment,
- a heat exchanger incorporated in both duct systems for bringing the inside air and the outside air into heat exchanging contact with each other,
- wherein the heat exchanger comprises at least two partial heat exchangers that as first and second partial heat exchangers are placed in series with each other at least as regards the introduced outside air, wherein the first partial heat exchanger is placed upstream from the second partial heat exchanger as regards the introduced outside air,
- wherein the ventilation system further comprises an air humidifier for the outside air, which is positioned in the first duct system in between both partial heat exchangers.

2. Ventilation system according to claim 1, wherein the first partial heat exchanger is provided with a condensate collector for moisture condensed from the inside air flowing through it and
- wherein the condensate collector is connected to the air humidifier for delivering the collected condensate thereto.

3. Ventilation system according to claim 1 or 2, wherein the first and second partial heat exchangers are also placed in series with each other for the inside air to be discharged.

4. Ventilation system according to claim 3, wherein the first partial heat exchanger is placed downstream from the second partial heat exchanger as regards the inside air to be discharged.

5. Ventilation system according to any one of the preceding claims, wherein the first partial heat exchanger is placed at a higher level than the second partial heat exchanger.

6. Ventilation system according to claim 5, wherein the first partial heat exchanger is placed at least substantially straight above the second partial heat exchanger.

7. Ventilation system according to claim 6, wherein the partial heat exchangers each have an inside air inlet, an inside air outlet, an outside air inlet and an outside air outlet, wherein the outside air outlet of the first partial heat exchanger is situated below the inside air inlet thereof and the outside air inlet of the second partial heat exchanger is situated above the inside air outlet thereof, and the outside air outlet of the first partial heat exchanger is situated at least substantially straight above the outside air inlet of the second heat exchanger.

8. Ventilation system according to any one of the preceding claims, provided with means for supplying moisture from a source to the air humidifier.

9. Method for ventilating a residential space, wherein the outside air is taken in and via a first duct system is supplied and delivered to the residential space and inside air via a second duct system is discharged from the residential space and delivered to the outside environment, wherein the inside air and the outside air are brought into heat exchanging contact with each other in a heat exchanger, wherein due to heat exchanging contact between the inside air to be discharged and the outside air taken in moisture in the inside air to be discharged is collected as condensate at a first location and is delivered to the outside air taken in at a second location in the first duct system situated downstream from the first location.

10. Method according to claim 9, wherein use is made of a ventilation system including a heat exchanger comprising at least two partial heat exchangers, which are placed in series with each other as first and second partial heat exchangers, wherein the outside air taken in first flows through the first partial heat exchanger and then through the second partial heat exchanger,
- wherein moisture in the inside air to be discharged is allowed to condense in the first partial heat exchanger and said condensate is passed on to an air humidifier for the outside air positioned in the first duct system in between both partial heat exchangers.

11. Method for ventilating a residential space, wherein outside air is taken in and via a first duct system is supplied and delivered to the residential space and inside air via a second duct system is discharged from the residential space and delivered to the outside environment, wherein the inside air and the outside air are brought into heat exchanging contact with each other in a heat exchanger,
- wherein use is made of a ventilation system including a heat exchanger comprising at least two partial heat exchangers that as first and second partial heat exchangers are placed in series with each other at least as regards the introduced outside air, wherein the outside air taken in first flows through the first partial heat exchanger and then through the second partial heat exchanger,
- wherein the outside air taken in is brought into moisture absorbing contact with an air humidifier at a location in the first duct system in between both partial heat exchangers.

12. Method according to claim 11, wherein moisture in the inside air to be discharged is allowed to condense in the first partial heat exchanger and this condensate is passed on to the air humidifier.

13. Method according to claim 11 or 12, wherein the inside air to be discharged is allowed to flow through both partial heat exchangers in series.

14. Method according to claim 13, wherein the inside air to be discharged is first allowed to flow through the second partial heat exchanger and then through the first partial heat exchanger.

15. Heat exchanger suitable and intended for the ventilation system according to any one of the claims 1-8.
